(19) Europäisches Patentamt
European Patent Office
Office européen des brevets

(11) EP 0 790 000 B1

(12) **EUROPÄISCHE PATENTSCHRIFT**

(45) Veröffentlichungstag und Bekanntmachung des Hinweises auf die Patenterteilung:
**10.04.2002 Patentblatt 2002/15**

(51) Int Cl.[7]: **A01N 37/46**
// (A01N37/46, 43:36, 43:653)

(21) Anmeldenummer: **97810071.7**

(22) Anmeldetag: **06.02.1997**

(54) **Mikrobizide**

Microbicides

Microbicides

(84) Benannte Vertragsstaaten:
**AT BE CH DE DK ES FR GB GR IE IT LI LU NL PT SE**
Benannte Erstreckungsstaaten:
**LT LV RO SI**

(30) Priorität: **15.02.1996 CH 39596**

(43) Veröffentlichungstag der Anmeldung:
**20.08.1997 Patentblatt 1997/34**

(73) Patentinhaber: **Syngenta Participations AG**
**4058 Basel (CH)**

(72) Erfinder: **Leadbitter, Neil**
**4106 Therwil (CH)**

(56) Entgegenhaltungen:
**WO-A-96/01560**

- **C. TOMLIN (ED.): "The Pesticide Manual" , BRITISH CROP PROTECTION COUNCIL XP002015897 10. Auflage, 1994 siehe Zeite 482: Fludioxonyl, Mixtures**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft fungizide Zweikomponenten-Gemische auf der Basis von Metalaxyl, das einen R-Enantiomeren-Anteil von mehr als 70 Gewichtsprozent besitzt, und ihre Verwendung zur Bekämpfung und zur Verhütung von Oomycetenbefall. Die R-Metalaxyl-Komponente wird Wirkstoff I genannt.

Im engeren Sinne betrifft die Erfindung Mischungen auf Basis von Metalaxyl mit einem R-Enantiomeren-Anteil von mehr als 85 Gew.-%, bevorzugt mehr als 92 Gew.-% und besonders bevorzugt mit reinem R-Enantiomeren (I), das im wesentlichen frei von S-Enantiomerem ist.

Metalaxyl der Formel

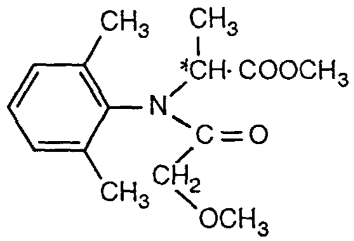

besitzt ein asymmetrisches *C-Atom und lässt sich auf übliche Art in die Enantiomeren spalten (GB-P.1,500,581). Seit 1975 weiss die Fachwelt, dass das R-Enantiomere in der Fungizidwirkung bei weitem die Wirkung des S-Enantiomeren übersteigt und in der Praxis als das eigentliche Wirkungsprinzip angesehen wird. Handelsübliches Metalaxyl ist als Racemat im Handel. Desgleichen sind Mischungen von Metalaxyl-Racemat mit Mancozeb, Chlorothalonil, Kupfer-Präparaten, Folpet, Fluazinam oder Cymoxanil im Handel oder anderweitig bekannt geworden. Eine Notwendigkeit der Aufspaltung des Racemats, das zur Hälfte aus dem erwünschten R-Enantiomer besteht, hat sich aufgrund der hohen Wirksamkeit des Racemats in der Vergangenheit nie ergeben. Metalaxyl stellt heutzutage ein Standardpräparat zur Bekämpfung von falschen Mehltauarten (Oomyceten) dar.

Sobald Metalaxyl eine hohen Anteil von R-Enantiomerem I aufweist, besitzt das Präparat eine sprungartig verbesserte Abbaubarkeit im Erdboden im Vergleich zu racemischem Metalaxyl (WO-96/01559). Ein mit R-Metalaxyl angereichertes Präparat ist daher aus ökologischen Gründen besonders als Mischungspartner für oberirdische Applikationen auf Pflanzenkulturen, insbesondere aber für Saatbeizung und vor allem für Erdbodenapplikationen geeignet, wo lange Verweilzeiten eines Pflanzenschutzmittels unerwünscht sind.

Es hat sich nun völlig überraschend gezeigt, dass R-Metalaxyl in reiner oder mehr als 70%iger Form im Gemisch mit dem Fungizid Fludioxonil
[=4-(2,2-Di-fluoro-1,3-benzodioxol-7-yl)-1H-pyrrol-3-carbonitril der Formel II

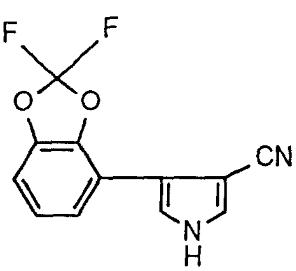

(II)

(EP-A-206 999) eine Mischung bildet, die deutlich erhöhte Wirkungen gegen Pflanzenpathogene erzielt und sich sowohl zur Blattapplikation an lebenden Pflanzenkulturen, insbesondere aber zur Beizapplikation an vermehrungsfähigem Pflanzenmaterial (= Vermehrungsgut) eignet. Unter letzterem Begriff sind Samen aller Arten (Früchte, Knollen, Körner), Stecklinge, abgeschnittene Triebe etc. zu verstehen. Bevorzugtes Anwendungsgebiet ist die Behandlung aller Arten von Samenkörnern, besonders die Saatgutbehandlung von Getreide.

WO-A-96 01560 betrifft ein synergistisches fungizides Zwei- oder Dreikomponentenmittel auf der Basis von Metalaxyl, dadurch gekennzeichnet, daß Metalaxyl zu mehr als 70 Gewichtsprozent aus dem R-Enantiomeren besteht, das Mittel als weitere Komponente Mancozeb, Chlorothalonil, ein Kupfersalz, Folpet, Fluazinam oder Cymoxanil enthält und, wenn Cymoxanil verwendet wird, das Mittel eine dritte Komponente ausgewählt von Mancozeb, Chlorothalonil, ein Kupfersalz, Folpet und Fluazinam enthält.

The Pesticide Manual, 10. Auflage, deutet unter dem Eintrag für Fludioxonil darauf hin, daß Mischungen aus Fludioxonil und Metalaxyl bekannt sind.

Gegenstand der vorliegenden Erfindung ist neben dem Zweikomponenten-Gemisch I+II auch ein Verfahren zur Bekämpfung von Pilzen, das gekennzeichnet ist durch Behandlung einer durch Pilze befallenen oder gefährdeten Stelle, z.B. von Pflanzen, in beliebiger Reihenfolge oder gleichzeitig mit a) dem Wirkstoff I und mit b) dem Wirkstoff der Formel II.

Günstige Mischungsverhältnisse der beiden Wirkstoffe sind I:II = 10:1 bis 1:30, bevorzugt I:II = 7:1 bis 1:20. In vielen Fällen sind Mischungen vorteilhaft, bei denen das Mischungsverhältnis der Aktivsubstanzen I:II = 7:1 bis 1: 10 beträgt, z.B. 7:1 bis 1:1. Günstige Mischungsverhältnisse sind weiterhin 6:1, 7:2, 2:3.

Die erfindungsgemässen Wirkstoffmischungen I+II besitzen sehr vorteilhafte kurative, präventive und systemische Fungizid-Eigenschaften zum Schutz von Kulturpflanzen. Mit den vorliegenden Wirkstoffmischungen können, wie erwähnt, an Pflanzen oder an Pflanzenteilen (Früchte, Blüten, Laubwerk, Stengel, Knollen, Wurzeln) von unterschiedlichen Nutzkulturen die auftretenden Mikroorganismen eingedämmt oder vernichtet werden, wobei auch später zuwachsende Pflanzenteile von derartigen Mikroorganismen verschont bleiben. Dies trifft insbesondere auch auf Mikroorganismen zu, die gegen Metalaxyl reduzierte Sensitivität entwickelt haben. Wirkstoffmischungen I + II haben den besonderen Vorteil, hochwirksam gegen Bodenkrankheiten zu sein, die meist im Frühstadium der Pflanzenentwicklung auftreten. Erreger sind vor allem Pythium, Tilletia, Gerlachia, Septoria, Ustilago, Fusarium, Rhizoctonia (sog. "damping off complex"). Weiterhin ist die erfindungsgemässe Mischung wirksam gegen Oomyceten wie Phytophthora, Plasmopara, Pseudoperonospora, Bremia etc. sowie auch gegen die Gattung Botrytis, Pyrenophora, Monilinia sowie weitere Vertreter der Klassen Ascomycetes, Deuteromycetes und Basidiomycetes.

In einer besonderen Ausgestaltung der Erfindung kann beispielsweise zur Beizapplikation als zusätzliche Wirkstoffkomponente III Difenoconazol der Zweiermischung zugefügt werden. Difenoconazol ist 1-{2-[2-Chlor-4 (4-chlorphenoxy)-phenyl]-4-methyl-1,3-dioxolan-2-ylmethyl}-1H-1,2,4-triazol und wird in der GB-2,098,607 beschrieben.

Dreikomponentenmischungen zur Beizung sind vorteilhaft solche, bei denen die Mischungsverhältnisse I:II: III sich etwa wie 6:1:10 verhalten, bespielsweise 15 g:2,5 g:24 g AS/100 kg oder 37,5 g:6,25 g:60 g AS/100 kg Saatgut.

Die Wirkstoff-Gemische der Formeln I und II werden üblicherweise in Form von Zusammensetzungen verwendet. R-Metalaxyl (Formel I) und der Wirkstoff der Formel II können gleichzeitig oder unmittelbar nacheinander auf die zu behandelnde Fläche oder Pflanze gegeben werden, zusammen mit gegebenenfalls weiteren in der Formulierungstechnik üblichen Trägerstoffen, Tensiden oder anderen applikationsfördernden Zusätzen.

Geeignete Träger und Zusätze können fest oder flüssig sein und entsprechen den in der Formulierungstechnik zweckdienlichen Stoffen, wie z.B. natürlichen oder regenerierten mineralischen Stoffen, Lösungs-, Dispergier-, Netz-, Haft-, Verdickungs-, Binde- oder Düngemitteln.

Die Verbindungen der Kombination werden dabei in unveränderter Form oder vorzugsweise zusammen mit den in der Formulierungstechnik üblichen Hilfsmitteln eingesetzt und werden daher z.B. zu Emulsionskonzentraten, streichfähigen Pasten, direkt versprühbaren oder verdünnbaren Lösungen, verdünnten Emulsionen, Spritzpulvern, löslichen Pulvern, Stäubemitteln, Granulaten, oder durch Verkapselungen in z.B. polymeren Stoffen in bekannter Weise verarbeitet. Die Anwendungsverfahren wie Versprühen, Vernebeln, Verstäuben, Verstreuen, Bestreichen oder Giessen werden gleich wie die Art der Mittel den angestrebten Zielen und den gegebenen Verhältnissen entsprechend gewählt. Günstige Aufwandmengen des Wirkstoffgemischs liegen im allgemeinen bei 0,5 g bis 400 g AS/ha, insbesondere bei 1 g bis 250 g AS/ha.

Die Formulierungen werden in bekannter Weise hergestellt, z.B. durch inniges Vermischen und/oder Vermahlen der Wirkstoffe mit Streckmitteln, wie z.B. mit Lösungsmitteln, festen Trägerstoffen, und gegebenfalls oberflächenaktiven Verbindungen (Tensiden).

Die agrochemischen Zubereitungen enthalten in der Regel 0,1 bis 99 %, insbesondere 0,1 bis 95 % Wirkstoffe der Formeln I und II, 99,9 bis 1 %, insbesondere 99,9 bis 5 % eines festen oder flüssigen Zusatzstoffes und 0 bis 25 %, insbesondere 0,1 bis 25 % eines Tensides.

Während als Handelsware oder zur Nassbeize oder Trockenbeize eher konzentrierte Mittel bevorzugt werden, verwendet der Endverbraucher für reifende Pflanzenkulturen in der Regel verdünnte Mittel.

Als Zielkulturen kommen vor allem Kartoffeln, Getreide (Weizen, Gerste, Roggen, Hafer, Reis) Mais, Zuckerrüben, Baumwolle, Hirsearten wie Sorghum, Sonnenblumen, Bohnen, Erbsen, Oelsaaten wie Raps, Sojabohnen, Kohlarten, Tomaten, Eierfrüchte (Auberginen), Pfeffer und andere Gemüse und Gewürze sowie auch Ziersträucher und Blumen in Frage.

Ein bevorzugtes Verfahren zur Applikation eines Gemisches von Wirkstoffen der Formeln I und II bzw. eines (agro)chemischen Mittels, das diese Wirkstoffe (gegebenenfalls unter Zusatz von Difenoconazol als Wirkstoff III) enthält, ist das Aufbringen auf das Blattwerk (Blattapplikation). Anzahl der Applikationen und Aufwandmenge richten sich dabei nach dem Befallsdruck für den entsprechenden Erreger (Pilzsorte). Das Wirkstoffgemisch kann aber auch über den Erdboden durch das Wurzelwerk in die Pflanze gelangen (systemische Wirkung), indem man den Standort der

Pflanze mit einer flüssigen Zubereitung tränkt oder die Substanzen in fester Form in den Boden einbringt, z.B. in Form von Granulat (Bodenapplikation). Das Gemisch der Verbindungen der Formeln I und II kann nach einem besonders bevorzugten Verfahren auf Vermehrungsgut, d.h. auf Samenkörner, Knollen, Früchte oder sonstiges zu schützendes Pflanzenmaterial (z.B. Blumenzwiebeln) aufgebracht werden (Coating), indem man das Material entweder mit einer flüssigen Zubereitung der Wirkstoffe benetzt oder tränkt oder mit einer festen Zubereitung beschichtet. Darüber hinaus sind in besonderen Fällen weitere Applikationsarten möglich, so z.B. die gezielte Behandlung von Pflanzenabschnitten oder Zweigen, die der Vermehrung dienen.

Die Formulierungen, d.h. die das Wirkstoffgemisch enthaltenden Mittel, Zubereitungen oder Zusammensetzungen werden in bekannter Weise hergestellt, z.B. durch inniges Vermischen und/oder Vermahlen der Wirkstoffe mit Streckmitteln, wie z.B. mit Lösungsmitteln, festen Trägerstoffen, und gegebenenfalls oberflächenaktiven Verbindungen (Tensiden).

Als Lösungsmittel können in Frage kommen: Aromatische Kohlenwasserstoffe, bevorzugt die Fraktionen $C_8$ bis $C_{12}$, wie z.B. Xylolgemische oder substituierte Naphthaline, Phthalsäureester wie Dibutyl- oder Dioctylphthalat, aliphatische Kohlenwasserstoffe wie Cyclohexan oder Paraffine, Alkohole und Glykole sowie deren Ether und Ester, wie Ethylenglykolmonomethylether, Ketone wie Cyclohexanon, stark polare Lösungsmittel wie N-Methyl-2-pyrrolidon, Dimethylsulfoxid oder Dimethylformamid, sowie gegebenenfalls epoxydierte Pflanzenöle oder Sojaöl; oder Wasser.

Als feste Trägerstoffe, z.B. für Stäubemittel und dispergierbare Pulver, lassen sich Calcit, Talkum, Kaolin, Montmorillonit oder Attapulgit, hochdisperse Kieselsäure oder saugfähige Polymerisate verwenden. Als gekörnte, adsorptive Granulatträger kommen Bimsstein, Ziegelbruch, Sepiolit oder Bentonit, als nicht-sorptive Träger z.B. Calcit oder Dolomit in Frage.

Als oberflächenaktive Verbindungen kommen je nach Art der zu formulierenden Wirkstoffe nichtionogene, kation- und/oder anionaktive Tenside mit guten Emulgier-, Dispergier- und Netzeigenschaften in Betracht. Unter Tensiden sind auch Tensidgemische zu verstehen.

Die in der Formulierungstechnik gebräuchlichen Tenside sind u.a. in folgenden Publikationen erschienen:

- "Mc Cutcheon's Detergents and Emulsifiers Annual" MC Publishing Corp., Glen Rock, New Jersey, 1988.
- M. and J. Ash, "Encyclopedia of Surfactants", Vol. I-III, Chemical Publishing Co., New York, 1980-1981.

Die nachfolgenden Beispiele dienen der Illustration der Erfindung, wobei "Wirkstoff' ein Gemisch aus R-Metalaxyl I und Verbindung II in einem bestimmten Mischungs-Verhältnis bedeutet.

| Spritzpulver | a) | b) | c) |
|---|---|---|---|
| Wirkstoff [I:II = 6:1(a), 7:2(b), 2:3(c)] | 28 % | 54 % | 75 % |
| Na-Ligninsulfonat | 5 % | 5 % | - |
| Na-Laurylsulfat | 3 % | - | 5 % |
| Na-Diisobutylnaphthalinsulfonat | - | 6 % | 10 % |
| Octylphenolpolyethylenglykolether (7-8 Mol Ethylenoxid) | - | 2 % | - |
| Hochdisperse Kieselsäure | 5 % | 10 % | 10 % |
| Kaolin | 59 % | 23 % | - |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

| Emulsions-Konzentrat | |
|---|---|
| Wirkstoff (I:II = 7:3) | 10 % |
| Octylphenolpolyethylenglykolether (4-5 Mol Ethylenoxid) | 3 % |
| Ca-Dodecylbenzolsulfonat | 3 % |
| Ricinusölpolyglykolether (35 Mol Ethylenoxid) | 4 % |
| Cyclohexanon | 30 % |
| Xylolgemisch | 50 % |

Dieses Konzentrat eignet sich zur Nassbeize von vermehrungsfähigem Pflanzenmaterial. Aus diesem Konzentrat können durch Verdünnen mit Wasser Emulsionen jeder gewünschten Verdünnung hergestellt werden, die sich im Pflanzenschutz einsetzen lassen.

| Extruder Granulat | |
|---|---|
| Wirkstoff (I:II = 4:1) | 15 % |
| Na-Ligninsulfonat | 2 % |
| Carboxymethylcellulose | 1 % |
| Kaolin | 82 % |

Der Wirkstoff wird mit den Zusatzstoffen vermischt, vermahlen und mit Wasser angefeuchtet. Dieses Gemisch wird extrudiert und anschliessend im Luftstrom getrocknet.

| Umhüllungs-Granulat | |
|---|---|
| Wirkstoff (I:II = 5:3) | 8% |
| Polyethylenglykol (MG 200) | 3 % |
| Kaolin<br>(MG = Molekulargewicht) | 89 % |

Der fein gemahlene Wirkstoff wird in einem Mischer auf das mit Polyethylenglykol angefeuchtete Kaolin gleichmässig aufgetragen. Auf diese Weise erhält man staubfreie Umhüllungs-Granulate.

| Suspensions-Konzentrat | |
|---|---|
| Wirkstoff (I:II:III = 6:1:10) | 34 % |
| Propylenglykol | 10 % |
| Nonylphenolpolyethylenglykolether<br>(15 Mol Et-oxid) | 6% |
| Na-Ligninsulfonat | 10 % |
| Carboxymethylcellulose | 1 % |
| Silikonöl<br>(in Form 75%ig. wässriger Emulsion) | 1 % |
| Wasser | 38 % |

Der fein gemahlene Wirkstoff wird mit den Zusatzstoffen innig vermischt. Man erhält so ein Suspensions-Konzentrat, aus welchem durch Verdünnen mit Wasser Suspensionen jeder gewünschten Verdünnung hergestellt werden können. Mit solchen Verdünnungen kann man lebende Pflanzen oder Saatgut durch Besprühen, Begiessen oder Eintauchen behandeln und vor Mikoorganismen-Befall schützen.

Biologische Beispiele

Ein synergistischer Effekt liegt bei Fungiziden immer dann vor, wenn die fungizide Wirkung der Wirkstoffkombination grösser ist als die Summe aus der Wirkung der einzeln applizierten Wirkstoffe.

Die zu erwartende Wirkung E für eine gegebene Wirkstoff-Kombination, z.B. zweier Fungizide, gehorcht der sogenannten COLBY-Formel und kann wie folgt berechnet werden, (COLBY, LR. "Calculating synergistic and antagonistic responses of herbicide combinations". Weeds 15, Seiten 20-22, 1967) (LIMPEL and al., 1062 "Weeds control by ... certain combinations". Proc. NEWCL, Vol. 16, pp. 48-53):
(mg AS/Liter = Milligramm Aktivsubstanz pro Liter oder ein Mehrfaches davon)

X = % Wirkung durch Fungizid I bei p mg AS/Liter
Y = % Wirkung durch Fungizid II bei q mg AS/Liter
E = die erwartete Wirkung der Fungizide I+II bei p+q mg AS/Liter Aufwandmenge (additive Wirkung),

dann ist nach Colby: $E = X + Y - \frac{X \cdot Y}{100}$

Wenn die tatsächlich beobachtete Wirkung (O) grösser ist als die erwartete, so ist die Kombination in ihrer Wirkung überadditiv, d.h. es liegt ein synergistischer Effekt vor.

Solche Effekte werden bei Mischapplikationen von Metalaxyl (mit hohem R-Enantiomerem-Anteil) und Fludioxonil beobachtet. Die Abbaugeschwindigkeit einer solchen Mischung im Erdboden ist, abhängig vom Bodentyp,

doppelt bis vierfach so hoch wie die aus racemischem Metalaxyl und Fludioxonil.

**Patentansprüche**

1. Fungizides Zweikomponentenmittel auf der Basis von Metalaxyl, **dadurch gekennzeichnet, dass** Metalaxyl zu mehr als 70 Gewichtsprozent aus dem R-Enantiomeren(I) besteht und das Mittel als weitere Komponente II Fludioxonil enthält.

2. Mittel gemäss Anspruch 1, wobei das Gewichtsverhältnis I:II = 10:1 bis 1:30, bevorzugt 7:1 bis 1:20 beträgt.

3. Mittel gemäss Anspruch 1, wobei das Metalaxyl einen Anteil an R-Enantiomerem von mehr als 85 Gew.-% enthält.

4. Mittel gemäss Anspruch 3, wobei das Metalaxyl einen Anteil an R-Enantiomerem von mehr als 92 Gew.-% enthält.

5. Mittel gemäss Anspruch 4, wobei reines R-Metalaxyl verwendet wird, das im wesentlichen frei von S-Enantiomerem ist.

6. Verfahren zur Bekämpfung und Verhütung von Pilzbefall an Pflanzen, Pflanzenteilen oder am Ort ihres Wachstums, **dadurch gekennzeichnet, dass** man in beliebiger Reihenfolge gleichzeitig oder unmittelbar nacheinander Metalaxyl mit einem Anteil an R-Enantiomeren von mehr als 70 Gew.-% und Fludioxonil appliziert.

7. Verfahren gemäss Anspruch 6, wobei der Anteil an R-Enantiomerem im verwendeten Metalaxyl mehr als 85 Gew.-% beträgt.

8. Verfahren gemäss Anspruch 7, wobei der Anteil an R-Enantiomerem im verwendeten Metalaxyl mehr als 92 Gew.-% beträgt.

9. Verfahren gemäss Anspruch 8, wobei als Metalaxyl-Komponente reines R-Metalaxyl eingesetzt wird, das im wesentlichen frei von S-Enantiomerem ist.

10. Verfahren gemäss Anspruch 6, wobei Phytophthora spp, Plasmopara, Pythium, Pseudoperonospora, Bremia, Fusarium, Rhizoctonia und/oder Botrytis bekämpft werden.

11. Verfahren gemäss Anspruch 6, wobei die Pflanzenteile das Vermehrungsgut sind.

12. Verfahren gemäss Anspruch 11, wobei das Vermehrungsgut das Saatgut ist.

**Claims**

1. A fungicidal two-component composition based on metalaxyl, wherein the metalaxyl consists of more than 70 % by weight of the R enantiomer (I) and the composition comprises as further component II fludioxonil.

2. A composition according to claim 1, wherein the ratio by weight of I:II = from 10:1 to 1:30, preferably from 7:1 to 1:20.

3. A composition according to claim 1, wherein the metalaxyl has an R enantiomer content of more than 85 % by weight.

4. A composition according to claim 3, wherein the metalaxyl has an R enantiomer content of more than 92 % by weight.

5. A composition according to claim 4, wherein pure R-metalaxyl which is substantially free of S enantiomer is used.

6. A method of controlling and preventing fungal infestation in plants, parts of plants or at their locus of growth, which comprises applying in any desired sequence, simultaneously or immediately one after the other, metalaxyl having an R enantiomer content of more than 70 % by weight, and fludioxonil.

7. A method according to claim 6, wherein the R enantiomer content of the metalaxyl used is more than 85 % by weight.

8. A method according to claim 7, wherein the R enantiomer content of the metalaxyl used is more than 92 % by weight.

9. A method according to claim 8, wherein the metalaxyl component is pure R-metalaxyl which is substantially free of S enantiomer.

10. A method according to claim 6, wherein Phytophthora spp., Plasmopara, Pythium, Pseudoperonospora, Bremia, Fusarium, Rhizoctonia and/or Botrytis is/are controlled.

11. A method according to claim 6, wherein the parts of plants are the propagation material.

12. A method according to claim 11, wherein the propagation material is seed.

**Revendications**

1. Produit fongicide à deux composants à base de métalaxyl, **caractérisé en ce que** le métalaxyl est constitué de plus de 70 % en poids de l'énantiomère R(I), et que le produit contient, en tant qu'autre composant (II) du fludioxonil.

2. Produit selon la revendication 1, dans lequel le rapport en poids I:II est de 10:1 à 1:30, de préférence de 7:1 à 1:20.

3. Produit selon la revendication 1, dans lequel le métalaxyl contient une proportion de l'énantiomère R supérieure à 85 % en poids.

4. Produit selon la revendication 3, dans lequel le métalaxyl contient une proportion de l'énantiomère R supérieure à 92 % en poids.

5. Produit selon la revendication 4, dans lequel on utilise un R-métalaxyl pur, qui pour l'essentiel est exempt de l'énantiomère S.

6. Procédé de maîtrise et de prévention d'une infestation fongique sur des végétaux, des parties de végétaux ou sur le site de leur croissance, **caractérisé en ce qu'**on applique dans un ordre quelconque, simultanément ou immédiatement l'un après l'autre, un métalaxyl ayant une proportion de l'énantiomère R supérieure à 70 % en poids, et du fludioxonil.

7. Procédé selon la revendication 6, dans lequel la proportion de l'énantiomère R dans le métalaxyl utilisé est supérieure à 85 % en poids.

8. Procédé selon la revendication 7, dans lequel la proportion de l'énantiomère R dans le métalaxyl utilisé est supérieure à 92 % en poids.

9. Procédé selon la revendication 8, dans lequel on utilise en tant que composant métalaxyl du R-métalaxyl pur qui pour l'essentiel est exempt de l'énantiomère S.

10. Procédé selon la revendication 6, dans lequel on maîtrise Phytophthora spp., Plasmopara, Pythium, Pseudoperonospora, Bremia, Fusarium, Rhizoctonia et/ou Botrytis.

11. Procédé selon la revendication 6, dans lequel les parties de végétaux sont les organes de la multiplication.

12. Procédé selon la revendication 11, dans lequel l'organe de multiplication est la semence.